# FASCICULE DE BREVET EUROPEEN

(11) **EP 2 923 539 B1**
(45) Date de publication et mention de la délivrance du brevet: **01.07.2020**
(21) Numéro de dépôt: 15305433.3
(22) Date de dépôt: 25.03.2015
(51) Int. Cl.: A01B 49/06, A01C 7/00

(54) **SEMOIR AVEC UN ROULEAU INTÉGRÉ POUR DÉTRUIRE UN COUVERT VÉGÉTAL**
SÄMASCHINE MIT INTEGRIERTER WALZE ZUM ZERSTÖREN EINER VEGETATIONSDECKSCHICHT
SEED DRILL WITH BUILT-IN ROLLER FOR DESTROYING PLANT COVER

(30) Priorité: 26.03.2014 FR 1452575
(43) Date de publication de la demande: 30.09.2015
(73) Titulaire: Kuhn S.A., 67700 Saverne (FR)
(72) Inventeur: Potier, Philippe, 67290 Zittersheim (FR); Viriat, Laurent, 67440 Westhouse-Marmoutier (FR)
(74) Mandataire: Nuss, Laurent

(56) Documents cités:
- EP-A1- 1 813 139
- WO-A1-2012/093958
- DE-A1- 4 025 989
- US-A- 4 785 890
- US-A- 5 461 993
- US-A1- 2008 142 233

## Description

La présente invention se rapporte au domaine technique général du machinisme agricole. L'invention concerne un semoir destiné à semer en présence d'une couverture végétale ou en présence de chaume et comportant un châssis portant des outils ouvreurs et des outils d'implantation.

Le semis, en présence d'une couverture végétale, appelé aussi le semis sous couvert, consiste à réaliser un nouveau semis alors que le sol est encore recouvert de végétaux. Cette culture intermédiaire est installée pour protéger le sol d'une évaporation trop rapide en période de sécheresse ou de l'action érosive des pluies et elle contrôle la levée des adventices. Le chaume est la partie des tiges de céréales qui couvre encore le champ après la moisson. Le semis se fait à l'aide d'un semoir adapté à cette technique culturale, généralement un semoir dit direct. Le semoir possède des disques ou outils ouvreurs afin de trancher la végétation et d'ouvrir un sillon étroit et des outils d'implantation qui déposent les graines dans le sillon. La particularité de cette technique culturale est qu'il n'y a aucune intervention mécanique de travail du sol entre la récolte de la culture précédente et le semis suivant. Du fait que les disques sont écartés les uns des autres, une partie du couvert végétal demeure entre les rangs et freine le développement des nouvelles plantes.

De ce fait, il est connu d'utiliser un rouleau équipé de couteaux qui lacère et écrase les végétaux en les laissant couchés sur le sol. Le rouleau est également utilisé pour coucher les tiges de cultures. La totalité de la couverture végétale est ainsi détruite. Ce rouleau dispose d'une largeur de travail comparable à celle du semoir et est généralement attelé à l'avant du tracteur. Ce type de rouleau dispose d'un diamètre de près de 600 mm et est conçu pour travailler à des vitesses plutôt élevées entre 15 et 25 km/h. En combinaison avec un semoir, l'efficacité d'un tel rouleau est fortement réduite puisqu'au-delà d'une vitesse de 18 km/h, la régularité du semis est généralement fortement détériorée. Pour utiliser une telle combinaison avec un rouleau à l'avant et un semoir à l'arrière, le tracteur doit être équipé d'un attelage frontal. Le temps d'attelage au tracteur de ces deux machines est également plus long. L'utilisateur devrait donc faire un compromis et choisir entre un semis régulier et une destruction efficace des végétaux.

Par les documents DE 40 25 989 et US 5 461 993, on connaît des semoirs selon le préambule de la revendication 1.

Le semoir selon DE 40 25 989 comporte un rouleau entraîné pourvu de doigts, éventuellement coupants, réalisant un traitement très localisé de la végétation et cela entre les futurs rangs de semis.

Le semoir selon US 5 461 993 comporte des roues entraînées pourvues de griffes et destinées à creuser les sillons pour le semis, ces roues étant surmontées de capots de protection et de guidage.

Ainsi, les moyens prévus dans ces semoirs connus ne réalisent qu'un traitement limité et localisé d'un éventuel couvert végétal existant et n'autorisent pas un semis de qualité à des vitesses de déplacement élevées.

En outre par les documents US-A-2008/0142233 et WO-A-2012/093958, on connaît des machines pour le travail du sol sur une grande étendue et en profondeur et comportant une pluralité d'outils réalisant différents traitements.

Toutefois, les machines divulguées par ces deux documents ne sont pas des semoirs et sont dépourvues d'outils d'implantation et d'outils ouvreurs.

La présente invention a pour but de remédier aux inconvénients précités. Elle doit notamment proposer une solution simple et aisée à mettre en œuvre (sans nécessiter d'attelage à l'avant du tracteur), qui allie une destruction efficace et globale du couvert végétal et un semis de qualité, même à des vitesses élevées, à savoir proches ou supérieures à 15 km/h.

A cet effet, l'invention propose un semoir selon le préambule de la revendication 1 et présentant en combinaison les caractéristiques de la partie caractérisante de cette revendication 1.

Grâce aux dispositions de l'invention, le rouleau de traitement de couvert végétal s'intègre dans le semoir et s'étend dans l'encombrement du semoir. Placé à l'avant du semoir, l'action du rouleau est efficace puisqu'il agit sur les débris végétaux directement devant les outils ouvreurs et sur toute la largeur de travail. Avec une telle solution, l'utilisateur dispose d'un semoir de semis direct prêt à l'emploi en l'attelant à l'arrière de son tracteur.

Des variantes de réalisation avantageuses et d'éventuelles caractéristiques additionnelles de l'invention ressortent des revendications 2 à 13.

En particulier, selon une caractéristique de l'invention, un déflecteur peut être monté, compte tenu de la direction d'avance au travail, à l'avant du rouleau. Un tel déflecteur dirige les végétaux et/ou les chaumes vers l'avant en vue de les coucher sur le sol pour que l'action du rouleau soit améliorée.

Selon une autre caractéristique possible de l'invention, ce déflecteur peut être fixé sur le châssis ou sur le rouleau. Une éventuelle structure de liaison peut permettre au déflecteur d'être déplacé dans différentes positions en fonction de la taille et/ou la densité des végétaux ou des chaumes.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue latérale d'un semoir, selon la présente invention dans une configuration de travail, attelé à un tracteur,
- la **figure 2** représente une vue de dessus partielle du semoir selon l'invention,
- la **figure 3** représente une vue de détail de la figure 1,
- la **figure 4** représente une vue en perspective d'une section du rouleau,
- la **figure 5** représente une vue de détail d'un autre exemple de réalisation.

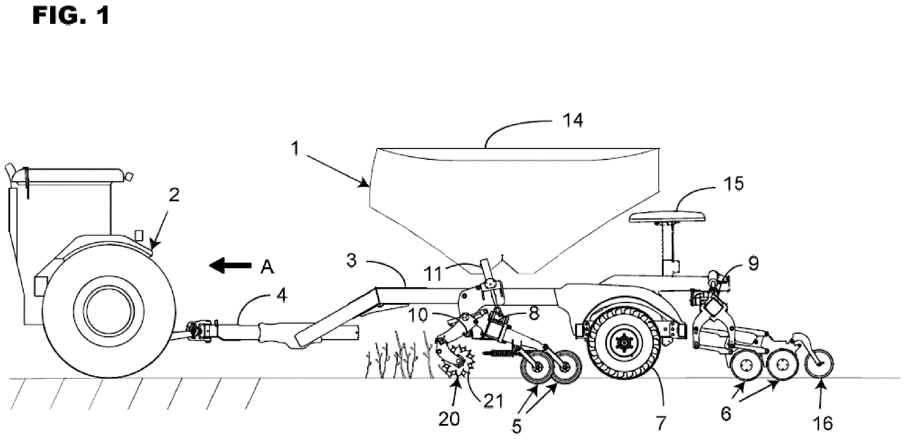

La figure 1 représente, en vue de côté, un semoir (1) conforme à l'invention. Un tel semoir (1) réalise en un seul passage l'ensemble des travaux pour l'implantation d'une culture. Le semoir (1) représenté est un outil de semis direct qui permet la mise en place d'une culture en un seul passage sur un sol non travaillé, c'est-à-dire qu'aucune machine n'a effectué un travail du sol depuis la récolte de la culture précédente. Le semoir (1) est tracté suivant une direction d'avance indiquée par la flèche (A) lors du travail et lors du transport. Dans la suite de la description, les notions suivantes "avant" et "arrière", "devant" et "derrière" sont définies par rapport à la direction d'avance (A). Le semoir (1) comporte un châssis (3) lié à l'arrière d'un tracteur (2) au moyen d'un timon d'attelage (4). Le châssis (3) porte des outils ouvreurs (5) et des outils d'implantation (6). Ce semoir (1) permet de préparer et d'ensemencer une bande de terre en un seul passage. La particularité en semis direct est que le semoir (1) ne travaille que la ligne de semis. L'outil ouvreur (5) réalise un travail localisé sur la ligne de semis avant que les graines soient mises en terre par un outil d'implantation (6). Les outils ouvreurs (5) sont disposés devant les outils d'implantation (6) et suivant une ligne au moins sensiblement horizontale et perpendiculaire à la direction d'avance (A). L'outil d'implantation (6) est ainsi disposé dans le prolongement de l'outil ouvreur (5) correspondant. Le châssis (3) repose sur le sol au moyen de roues (7). Les roues (7) s'étendent entre les outils ouvreurs (5) et les outils d'implantation (6). Le châssis (3) comporte une poutre avant (8) sur laquelle sont fixés les outils ouvreurs (5) et une poutre arrière (9) sur laquelle sont fixés les outils d'implantation (6). La poutre avant (8) et la poutre arrière (9) sont disposées transversalement par rapport à la direction d'avance (A), elles sont parallèles entre elles. Les outils ouvreurs (5) comme les outils d'implantation (6) sont susceptibles de passer d'une position de travail à une position de transport ou de demi-tour, et inversement, au moyen d'au moins un actionneur. Lors du transport et des manœuvres, les outils ouvreurs (5) et les outils d'implantation (6) sont éloignés du sol et rapprochés du châssis (3) par l'actionneur respectif. A cet effet, la poutre avant (8) est fixée sur le châssis (3) au moyen d'une articulation avant (10) et la poutre arrière (9) est fixée sur le châssis (3) au moyen d'une articulation arrière. L'articulation avant (10) s'étend avantageusement devant la poutre avant (8). L'actionneur avant (11) est articulé d'une part sur le châssis (3) et d'autre part sur la poutre avant (8). L'actionneur arrière est articulé d'une part sur le châssis (3) et d'autre part sur la poutre arrière (9). L'articulation avant (10) et l'articulation arrière présente chacune un axe sensiblement horizontal et perpendiculaire à la direction d'avance (A). Les actionneurs avant et arrière peuvent être commandés séparément.

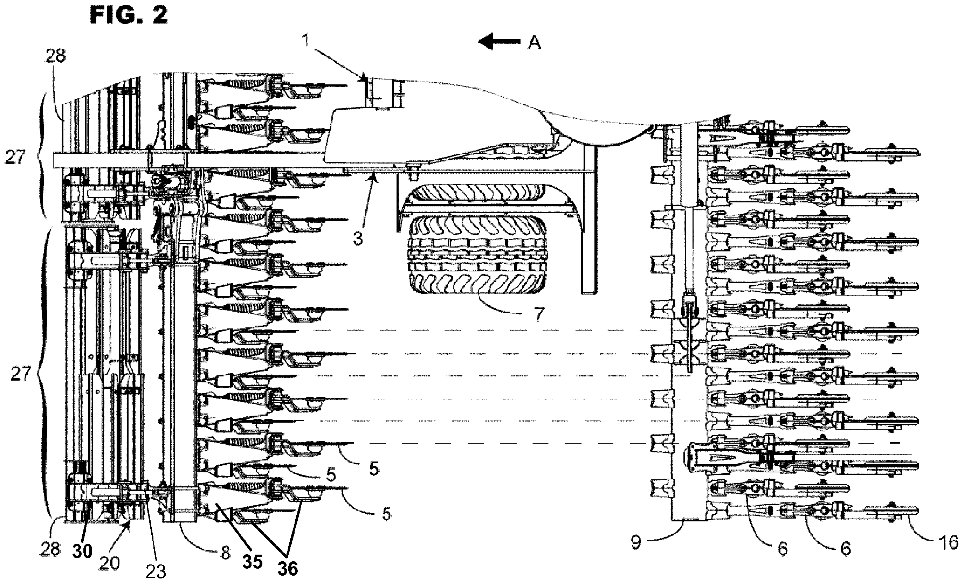

La figure 2 représente une partie du semoir (1) selon une vue de dessus. On constate que les outils ouvreurs (5) ainsi que les outils d'implantation (6) sont répartis de manière au moins sensiblement uniforme sur toute la largeur de travail du semoir (1). Dans l'exemple de réalisation, l'outil ouvreur (5) possède une forme sensiblement circulaire. L'outil ouvreur (5) est réalisé par un seul disque qui ouvre et émiette, sous l'effet de la vitesse, un sillon avant le passage de l'outil d'implantation (6). Dans la réalisation, il s'agit d'un disque droit. Dans une alternative, le disque est ondulé ou gaufré. Un disque gaufré travaille la ligne de semis sur une bande étroite et un disque ondulé génèrera un sillon plus large et un foisonnement plus important sur la ligne de semis. La circonférence du disque pénètre plus ou moins profondément dans le sol et assure ainsi la préparation d'une ligne de semis. L'outil ouvreur (5) va aussi couper des résidus végétaux qui se trouvent sur la ligne de semis. L'outil d'implantation (6) est disposé dans le prolongement de l'outil ouvreur correspondant, ceci est représenté par les traits discontinus sur la figure 2. L'outil d'implantation (6) est réalisé sous la forme d'au moins un disque semeur. Chaque disque semeur se déplace toujours au moins dans le sillon étroit créé par le disque ouvreur correspondant. La culture est ainsi mise en place en un seul passage. Dans l'exemple de réalisation, chaque outil d'implantation (6) est constitué de deux disques disposés en V qui ouvrent le sillon dans lequel est déposée la graine.

Selon la figure 1, le châssis (3) porte également une trémie (14) qui s'étend sensiblement à la verticale des outils ouvreurs (5). La trémie (14) permet le stockage des graines qui sont dosées puis acheminées vers les outils d'implantation (6). La distribution des graines se fait de manière pneumatique depuis la trémie (14) via un doseur et une tête de répartition (15) vers les outils d'implantation (6). Le doseur se situe dans la partie inférieure de la trémie (14). Les outils d'implantation (6) sont raccordés par des tuyaux (non représentés) à la tête de répartition (15). Les outils d'implantation (6) fabriquent un sillon à une profondeur déterminée pour y placer la graine et la recouvrir. Chaque outil d'implantation (6) est lié à la poutre arrière (9) au moyen d'un système à parallélogramme. L'outil d'implantation (6) est suivi d'une roue de contrôle (16) pour le contrôle de la profondeur. Le semoir (1) peut également être équipé d'une herse de recouvrement (non représentée) qui s'étend derrière les outils d'implantation (6). La position de la trémie (14) à l'avant du châssis (3) est favorable pour d'une part la répartition des charges et d'autre part mettre du poids sur les outils ouvreurs (5).

La conception du semoir (1) selon l'invention le destine aussi à semer dans un champ recouvert d'une couverture végétale ou de chaume. Le semis est réalisé directement dans le couvert végétal après une destruction mécanique. La destruction de la couverture végétale ou de chaume se fait au moyen d'un dispositif rotatif. Après le passage du dispositif rotatif, la destruction de la culture intermédiaire se fait naturellement puisque la nouvelle culture se développe et prendra le dessus. La destruction mécanique est ainsi réalisée par un dispositif rotatif tel qu'un rouleau. Le couvert végétal est détruit généralement avant que le couvert ne monte en graine. Le couvert de chaume est laissé pour protéger le sol de l'action érosive des pluies. Le couvert végétal est, quant à lui, installé comme culture intermédiaire pour protéger le sol d'une évaporation trop rapide en période de sécheresse et/ou de l'action érosive des pluies. La couverture végétale est implantée après la récolte, elle bénéficie donc de l'humidité résiduelle du sol. Cette couverture végétale limite l'érosion, la fuite des éléments nutritifs en profondeur protège la structure du sol et permet de gérer les populations d'adventices par concurrence.

Selon l'invention, le semoir (1) comporte un rouleau (20) équipés des couteaux (21) répartis sur sa circonférence, le rouleau (20) s'étend sous le châssis (3) et directement à l'avant des outils ouvreurs (5). En s'intégrant sous le châssis (3) et devant les outils ouvreurs (5), le rouleau (20) s'étend dans l'encombrement du semoir (1). L'action du rouleau (20) est efficace puisqu'il agit sur les débris végétaux, directement devant les outils ouvreurs (5). Sa fonction est d'écraser les végétaux ou les tiges de cultures en les laissant couchés sur le sol et préférentiellement de les découper en morceaux, ou au moins de les lacérer. L'utilisateur dispose donc d'un rouleau (20) à couteaux intégré au semoir (1).

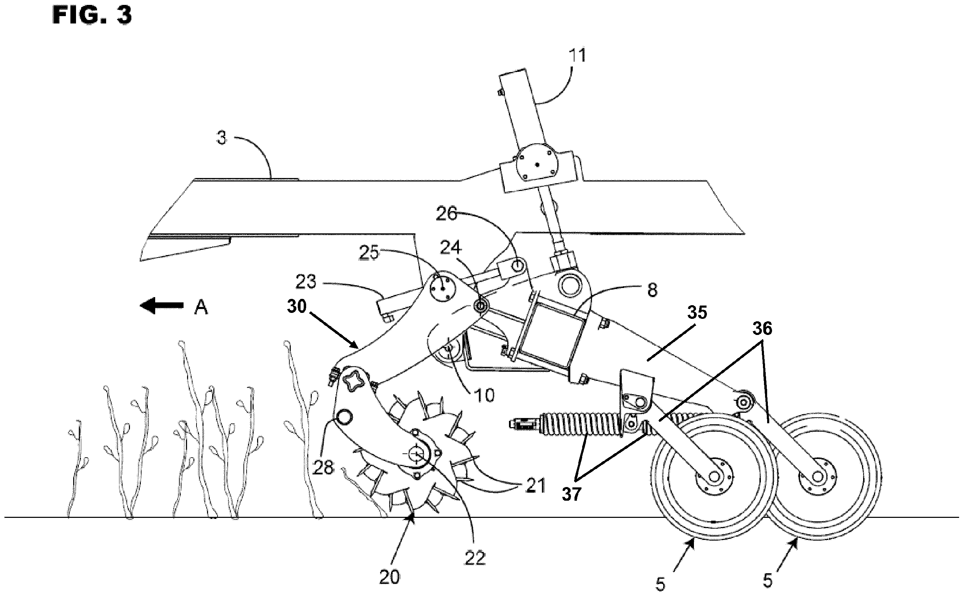

La figure 3 représente une vue de détail de la figure 1, au niveau de la partie avant du semoir (1). Sur la figure 3 est représenté une partie du châssis (3), le rouleau (20) et les outils ouvreurs (5). Le rouleau (20) est fixé sur le châssis (3) du semoir (1). Des végétaux en cours de croissance constituant le couvert végétal sont également représentés schématiquement. Le rouleau (20) s'étend donc devant les outils ouvreurs (5) et couche le couvert végétal sur le sol. Le rouleau (20) est entraîné en rotation lors du travail par le déplacement du semoir (1), il roule les végétaux sur le sol. Le rouleau (20) est ainsi avantageusement monté libre en rotation et tourne autour d'un axe longitudinal (22) sensiblement perpendiculaire à la direction d'avance (A). Les couteaux (21) répartis sur sa circonférence permettent de lacérer, voire de découper, les végétaux ou les tiges de cultures. Dans l'exemple de réalisation, le rouleau (20) comporte huit couteaux (21) qui sont répartis régulièrement sur sa circonférence. La rotation du rouleau (20) est plus facile lorsqu'il est équipé de huit couteaux (21).

Dans une alternative, le rouleau (20) peut être entraîné au moyen d'un moteur. La vitesse de rotation du rouleau (20) pourra ainsi être différente de celle induite par le déplacement du semoir (1). Dans une autre alternative, le rouleau (20) est équipé d'un dispositif de freinage. Avec le dispositif de freinage, la rotation du rouleau (20) pourra être ralentie voire immobilisée dès que le rouleau (20) n'est plus en contact avec le sol.

Selon la figure 3, on remarque que le rouleau (20) est fixé sur le châssis (3) et notamment sur la poutre avant (8). Pour avoir une action plus ou moins agressive sur le couvert végétal, le rouleau (20) peut être déplacé dans différentes positions par rapport au châssis (3). La position du rouleau (20) est réglable au moyen d'au moins un organe de commande (23). L'organe de commande (23) est lié d'une part sur le rouleau (20) et d'autre part sur le châssis (3) ou de la poutre (8). De préférence, le rouleau (20) est relié à la poutre avant (8) au moyen d'une première articulation (24) d'axe horizontal et perpendiculaire à la direction d'avance (A). La première articulation (24) s'étend derrière et au-dessus de l'articulation avant (10). L'organe de commande (23) est donc fixé plus précisément sur le rouleau (20) au moyen d'une deuxième articulation (25) et à la poutre avant (8) au moyen d'une troisième articulation (26). Grâce à l'organe ou aux organes de commande (23), le rouleau (20) est donc déplaçable en hauteur par rapport au châssis (3) et notamment par rapport à la poutre avant (8). Ce réglage permet donc d'adapter le rouleau (20) aux conditions de travail. L'organe de commande (23) permet également de soulever le rouleau (20) lorsqu'il n'est pas utilisé et durant le transport. On remarque que le rouleau (20) s'étend devant la poutre avant (8) et que les outils ouvreurs (5) s'étendent derrière la poutre avant (8), le rouleau (20) et les outils ouvreurs (5) basculant dans des directions opposées (respectivement vers l'avant et vers l'arrière) lors de leur repliement en position de transport ou de non utilisation, évitent les interférences tout en demeurant dans l'encombrement du semoir (1). L'organe de commande (23) est constitué d'un vérin hydraulique qui tend à faire pivoter le rouleau (20) autour de la première articulation (24).

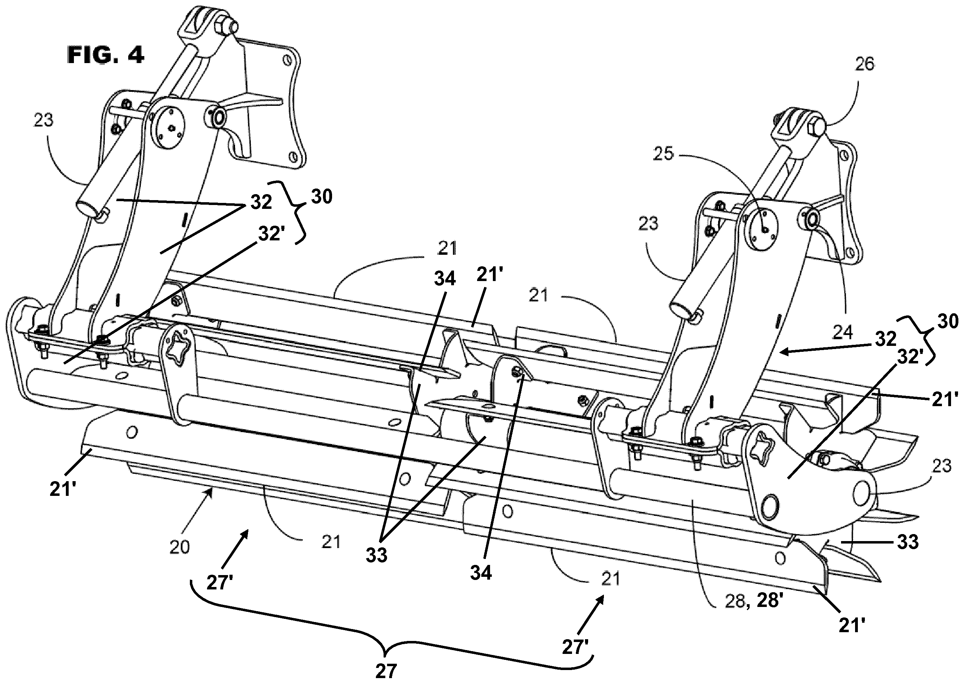

D'après la figure 2, un rouleau (20) s'étend à l'avant sur toute la largeur du semoir (1). Il est donc capable d'écraser le couvert végétal sur la totalité de la largeur de travail. Il présente une largeur sensiblement égale à celle du semoir (1). De préférence, le rouleau (20) est composé de plusieurs sections (27) indépendantes. Grâce à ces différentes sections (27), le suivi du terrain du rouleau (20) est amélioré et la destruction du couvert végétal est assurée. Sur la figure 2 sont représentées deux sections (27) de rouleau (20). La figure 4 représente, selon une vue en perspective, une section (27) de rouleau (20). Dans cette réalisation, le rouleau (20) comporte huit couteaux (21) répartis sur sa circonférence. Comme le montrent également les figures 2 et 4, les couteaux (21) s'étendent dans la direction de l'axe longitudinal de rotation (22) et peuvent être réalisés chacun par une lame droite. On peut distinguer un décalage angulaire entre les couteaux (21) montés du côté droit de la section (27) et ceux montés du côté gauche. Ce décalage angulaire est bénéfique pour l'entraînement en rotation du rouleau (20) comme pour l'action des couteaux (21) sur le couvert végétal. Dans une réalisation non représentée, les couteaux (21) sont conformés en hélice. Une telle forme améliore la lacération des végétaux ou des chaumes. L'enroulement en hélice des couteaux (21) favorise aussi l'entraînement en rotation du rouleau (20).

Comme le montrent les figures 3 et 4 notamment, le rouleau (20), et plus généralement chaque section longitudinale (27) indépendante de ce dernier, est relié(e) à la poutre avant (8) et à l'actionneur (23), au niveau des articulations (24) et (25) respectivement, par des bras support (30), avantageusement deux, reliés à leurs extrémités inférieures au moyeu (31) du rouleau (20) ou de la section (27) concernée.

Comme le montre la figure 4, la forme des bras support (30) peut être telle que le rouleau (20) est déplacé sous l'effet d'une traction lors de l'avance du semoir (1) en position de travail, le rouleau (20) roulant ainsi sur les obstacles rencontrés.

Plus précisément, chaque bras support (30) peut comprendre deux parties (32) et (32') formant entre elles un angle déterminé et réalisé d'un seul tenant ou par assemblage de deux éléments séparés (par exemple un double bras supérieur (32) et un flasque inférieur (32')), la partie supérieure (32) reliée aux articulations (24 et 25) étant inclinée dans la direction d'avance (A), et la partie inférieure (32') reliée au moyeu (31) étant inclinée dans la direction opposée, en position de travail du semoir (1).

Les bras support (30) peuvent présenter une structure au moins partiellement déformable, sous contrainte, par exemple en prévoyant des moyens élastiquement déformables au niveau de l'assemblage entre les parties supérieure (32) et inférieure (32').

Des moyens d'amortissement des chocs et/ou des vibrations peuvent également être intégrés dans ces bras support (30), ou au niveau de leur liaison avec les sections (27) du rouleau (20) ou avec la partie (8).

Bien entendu, différentes constructions sont possibles pour le rouleau (20) et ses différentes (au moins deux) sections (27) constitutives.

Ainsi, comme le montre la figure 4 et en accord avec un mode de réalisation avantageux de l'invention, aboutissant à une structure robuste, légère et d'un prix de revient limité, chaque section (27) peut comprendre deux portions (27') dont chacune peut être constituée d'une pluralité de couteaux (21) sous forme de plaques métalliques allongées, solidarisées rigidement, au moins à proximité de leurs extrémités opposées, sur des flasques (33) discoïdaux pourvus de sites (34) de réception et de fixation répartis sur leur périphérie extérieure. Les tranchants ou arêtes (21') desdites lames (21) sont saillantes par rapport à ces flasques (33) et dirigé(e)s vers l'extérieur. On aboutit ainsi à une structure de cage ajourée. Avantageusement, chaque lame (21) est inclinée radialement en direction du sens de rotation du rouleau (20) lors du déplacement dans la direction (A) du semoir (1) et les deux flasques (33) sont avantageusement également reliés entre eux et traversés par le moyeu (31).

Préférentiellement, chaque portion (27') de section (27) comprend au moins six, préférentiellement au moins huit, lames longitudinales (21) réparties régulièrement autour du moyeu (31), les lames (21) des deux portions (27') étant décalées entre elles d'un demi-pas circulaire.

On aboutit ainsi à un roulement moins saccadé, avec un meilleur suivi du terrain, et en réduisant notablement des phénomènes de résonance.

Néanmoins, les sections (27) peuvent aussi ne pas être divisées en portions (27') et, dans ce cas, les lames (21) s'étendent de manière continue entre les deux flasques (33) situées aux deux extrémités opposées de la section (27) considérée.

Comme le montrent les figures 1 à 3 et 5, il peut être prévu que les outils rotatifs ouvreurs (5) et les outils rotatifs d'implantation (6) soient montés, par paires et sur deux rangées, respectivement sur des poutres transversales avant (8) et arrière (9), en étant mutuellement alignés un par un dans la direction d'avance (A), les outils rotatifs ouvreurs (5) étant reliés à ladite poutre avant (8) par une console pourvue de deux bras support indépendants pour chaque paire d'outils ouvreurs (5) et ladite poutre avant (8) étant pivotable par rapport au châssis sous l'action d'un actionneur (11) pour déplacer lesdits outils ouvreurs (5) entre une position de travail au sol et une position relevée. La position de la console (35) sur la poutre (8) fixe la position latérale de la paire d'outils (5) qui lui sont reliés.

Les bras support (36) sont fixés chacun par une liaison pivot à la console (35), ces liaisons pivot présentant des axes perpendiculaires à la direction (A) et sensiblement horizontaux en position de travail. De plus, les outils (5) peuvent être sollicités vers le sol par des moyens élastiques (37) agissant sur les bras support (36).

En outre, et avantageusement, les outils rotatifs ouvreurs (5), les outils rotatifs d'implantation (6) et le rouleau (20) présentent des diamètres de même grandeur, voire sensiblement identiques.

D'une manière particulièrement avantageuse, un déflecteur (28) est monté, compte tenu de la direction d'avance (A), à l'avant du rouleau (20). Le déflecteur (28) dirige les végétaux et/ou les chaumes vers l'avant en vue de les coucher sur le sol pour améliorer l'action du rouleau (20). Le déflecteur (28) s'étend de préférence dans l'encombrement en hauteur du rouleau (20). Dans le mode représenté à la figure 3, le déflecteur (28) a une position fixe par rapport au rouleau (20). Le déflecteur (28) est situé dans le quart avant et supérieur du rouleau (20). Le déflecteur (28) s'étend, de préférence, au moins sur toute la largeur du semoir (1) pour que le couvert végétal présent sur toute la largeur du semoir (1) soit dirigé vers l'avant. Le déflecteur (28) comporte au moins une section. De préférence, chaque section (27) de rouleau (20) présente un déflecteur (28) correspondant. Le déflecteur (28) est réalisé sous la forme d'un tube ou tout autre élément comparable à diriger des éléments vers le sol. La section du tube est circulaire, ovale ou carrée.

Dans l'exemple de réalisation représenté figures 3 et 4, le déflecteur (28) a également une fonction structurelle puisqu'il relie rigidement entre eux les deux bras support (30) associés à une section (27) du rouleau (20) et situés aux extrémités opposées de celle-ci.

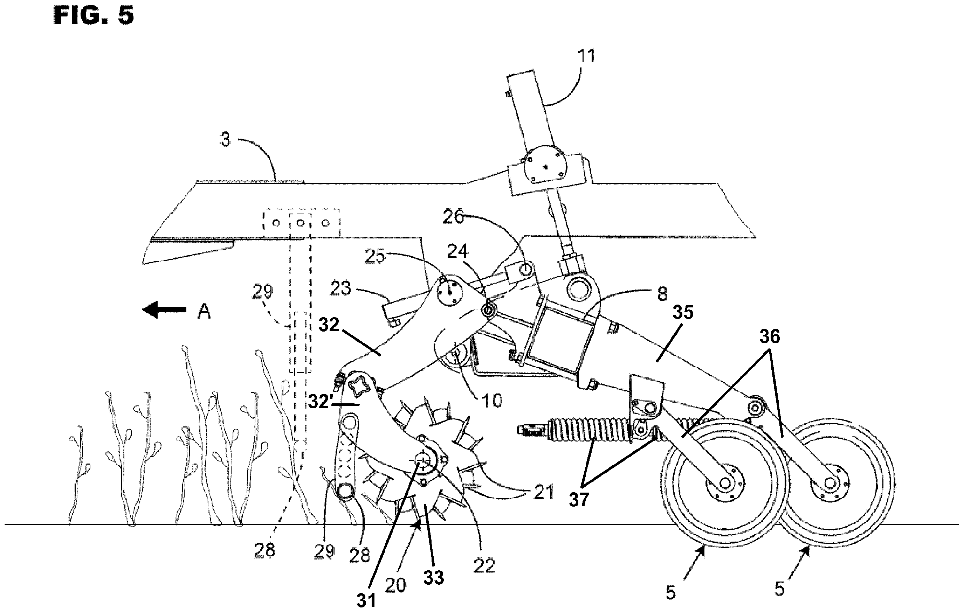

Dans l'autre exemple de réalisation de la figure 5, le déflecteur (28) est fixé sur le rouleau (20) au moyen d'une structure de liaison (29). La structure de liaison (29) autorise au déflecteur (28) d'être déplacé dans différentes positions. Le déflecteur peut être approché respectivement être éloigné du rouleau (20). Un tel réglage permet d'adapter le rouleau (20) en fonction de la taille et/ou la densité des végétaux ou des chaumes. Dans la position représentée, le déflecteur (28) s'étend dans le quart avant et inférieur du rouleau (20). Son action se situe donc près du sol et proche de la partie inférieure des plantes. Dans une alternative représentée en traits discontinus sur la figure 5, le déflecteur (28) est fixé sur le châssis (3). La structure de liaison (29) permet de modifier la position du déflecteur (28) en hauteur par rapport au châssis (3) et en avant ou en arrière par rapport à la direction d'avance (A).

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Semoir (1) destiné à semer en présence d'une couverture végétale ou de chaume et comportant un châssis (3) portant des outils ouvreurs (5) et des outils d'implantation (6), ce semoir (1) comportant un rouleau (20) fixé sur le châssis (3) en étant monté pivotant autour d'un axe longitudinal (22) perpendiculaire à la direction d'avance (A) au travail, ledit rouleau (20) étant équipé de couteaux (21) répartis sur sa circonférence,
semoir (1) **caractérisé**
**en ce que** ledit rouleau (20) s'étend sous le châssis (3), sur toute la largeur de travail du semoir (1), dans l'encombrement de ce dernier et directement à l'avant des outils ouvreurs (5),
**en ce que** ledit rouleau (20) comporte plusieurs sections (27) constitutives indépendantes, alignées dans la direction de l'axe longitudinal (22) et sensiblement adjacentes, (27'), en ce que chaque section (27) du rouleau (20) est divisée en deux portions
**en ce que** chaque portion (27') de chaque section (27) du rouleau (20) est constituée d'une pluralité de couteaux en forme de lames (21) allongées s'étendant entre deux flasques rotatifs (33) dans la direction de l'axe longitudinal (22), en étant réparties régulièrement sur la périphérie desdits flasques (33) de forme sensiblement discoïdale et pourvues de sites (34) de réception et de fixation répartis sur leur périphérie extérieure, chaque portion (27') présentant ainsi une structure de cage ajourée et les flasques (33) étant reliés au châssis (3) par des bras support (30), pivotants et réglables en position, ce par l'intermédiaire du moyeu (31) de la section (27) considérée, et
**en ce que** les couteaux (21) des deux portions (27') d'une section (27) sont décalés angulairement entre eux, préférentiellement d'un demi-pas.

2. Semoir selon la revendication 1, **caractérisé en ce que** les couteaux (21) consistent en des lames allongées, droites ou hélicoïdales, s'étendant dans la direction de l'axe longitudinal (22) de rotation du rouleau (20) de manière sensiblement continue, d'un seul tenant ou par segments, sur toute la longueur dudit rouleau (20).

3. Semoir selon l'une quelconque des revendications 1 et 2, **caractérisé en ce que** le rouleau (20) est fixé, en étant libre en rotation ou non autour de son axe longitudinal (22), sur une poutre transversale avant (8) solidaire du châssis (3) et qui porte les outils ouvreurs (5).

4. Semoir selon la revendication 1, **caractérisé en ce que** chaque section (27) du rouleau (20) est montée de manière indépendante sur la poutre avant transversale (8), à laquelle elle est reliée par une première articulation pivot (24) avec un axe de pivotement perpendiculaire à la direction d'avance (A) et horizontal en position de travail du semoir (1).

5. Semoir selon la revendication 4, **caractérisé en ce que** la position de chaque section (27) du rouleau (20), notamment sa position en hauteur par rapport à la poutre avant (8), est réglable par l'intermédiaire d'au moins un organe de commande (23), avantageusement par pivotement autour de la première articulation pivot (24).

6. Semoir selon l'une quelconque des revendications 1 à 5, **caractérisé en ce que** chaque section (27) du rouleau (20) est reliée à la poutre avant transversale (8) par des bras support (30), éventuellement à structure déformable et/ou intégrant des moyens d'amortissement, montés chacun sur cette dernière par une première articulation pivot (24) et dont la position et/ou l'orientation est réglable par un organe de commande (23) correspondant, la forme des bras support (30) étant avantageusement telle que le rouleau (20) est déplacé sous l'effet d'une traction lors de l'avance du semoir (1) en position de travail.

7. Semoir selon l'une quelconque des revendications 1 à 6, **caractérisé en ce qu'**un déflecteur (28) est monté, compte tenu de la direction d'avance (A) au travail, à l'avant du rouleau (20), préférentiellement sur le châssis (3) ou sur le rouleau (20).

8. Semoir selon la revendication 7, **caractérisé en ce que** le déflecteur (28) s'étend dans l'encombrement en hauteur du rouleau (20) et au moins sur toute la largeur du semoir (1), de manière continue ou par sections contiguës alignées (28').

9. Semoir selon l'une quelconque des revendications 7 et 8, **caractérisé en ce que** le déflecteur (28) ou chaque section (28') constitutive de ce dernier est monté(e) fixe sur le rouleau (20) ou une section (27) respective correspondante de ce dernier, préférentiellement en tant que traverse reliant des bras support (30) dudit rouleau (20) ou desdites sections (27).

10. Semoir selon l'une quelconque des revendications 7 et 8, **caractérisé en ce que** le déflecteur (28) ou chaque section (28') constitutive de ce dernier est monté(e) réglable en position, par rapport au rouleau (20) ou à une section (27) respective correspondante de ce dernier, ou par rapport au châssis (3) et/ou à la poutre avant (8), en termes de distance, de hauteur et/ou d'orientation, préférentiellement par l'intermédiaire d'une structure de liaison (29).

11. Semoir selon l'une quelconque des revendications 7 à 10, **caractérisé en ce que** le déflecteur (28) ou chaque section (28') constitutive de ce dernier est réalisé(e) sous la forme d'un tube ou analogue.

12. Semoir selon l'une quelconque des revendications 1 à 11, **caractérisé en ce que** les outils ouvreurs (5) et les outils d'implantation (6) sont des outils rotatifs et sont montés, par paires et sur deux rangées, respectivement sur des poutres transversales avant (8) et arrière (9), en étant mutuellement alignés un par un dans la direction d'avance (A), les outils rotatifs ouvreurs (5) étant reliés à ladite poutre avant (8) par une console (35) pourvue de deux bras support (36) indépendants, un pour chaque outil d'une paire d'outils ouvreurs (5), et ladite poutre avant (8) étant avantageusement pivotable par rapport au châssis (3) sous l'action d'un actionneur (11) pour déplacer lesdits outils ouvreurs (5) entre une position de travail au sol et une position relevée.

13. Semoir selon l'une quelconque des revendications 1 à 12, **caractérisé en ce que** les outils rotatifs ouvreurs (5), les outils rotatifs d'implantation (6) et le rouleau (20) présentent des diamètres environ de même grandeur, voire sensiblement identiques.

## Patentansprüche

1. Sämaschine (1) zum Säen bei Vorhandensein einer Vegetationsdecke oder Stoppeln und umfassend ein Chassis (3), das Öffnungswerkzeuge (5) und Einbringungswerkzeuge (6) trägt, wobei die Sämaschine (1) eine Walze (20) umfasst, die an dem Chassis (3) befestigt ist und um eine Längsachse (22) schwenkbar montiert ist, die senkrecht zur Fahrtrichtung (A) bei der Arbeit ist, wobei die Walze (20) mit Schneiden (21) ausgestattet ist, die über ihren Umfang verteilt sind,
wobei die Sämaschine (1) **dadurch gekennzeichnet ist,**
**dass** die Walze (20) sich unter dem Chassis (3) über die gesamte Arbeitsbreite der Sämaschine (1) im Bauraum letzterer und direkt vor den Öffnungswerkzeugen (5) erstreckt,
**dass** die Walze (20) mehrere unabhängige Bestandteilabschnitte (27) umfasst, die in Richtung der Längsachse (22) aneinandergereiht und im Wesentlichen benachbart sind,
**dass** jeder Abschnitt (27) der Walze (20) in zwei Teile (27') geteilt ist,
**dass** jeder Teil (27') jedes Abschnitts (27) der Walze (20) aus einer Vielzahl von Schneiden in Form von länglichen Klingen (21) gebildet ist, die sich zwischen zwei Drehflanschen (33) in Richtung der Längsachse (22) regelmäßig über den Umfang der Flansche (33) verteilt erstrecken, die im Wesentlichen scheibenförmig sind und mit Aufnahme- und Befestigungsstellen (34) versehen sind, die über ihren Außenumfang verteilt sind, wobei jeder Teil (27') somit eine durchbrochene Käfigstruktur aufweist und die Flansche (33) mittels der Nabe (31) des betreffenden Abschnitts (27) mittels Tragarmen (30), schwenkbar und in der Position einstellbar, mit dem Chassis (3) verbunden sind, und
**dass** die Schneiden (21) der zwei Teile (27') eines Abschnitts (27), vorzugsweise um einen halben Abstand, winkelversetzt zueinander angeordnet sind.

2. Sämaschine nach Anspruch 1, **dadurch gekennzeichnet, dass** die Schneiden (21) aus länglichen, geraden oder spiralförmigen Klingen bestehen, die sich im Wesentlichen kontinuierlich in Richtung der Längsdrehachse (22) der Walze (20), einstückig oder segmentweise, über die gesamte Länge der Walze (20) erstrecken.

3. Sämaschine nach einem der Ansprüche 1 und 2, **dadurch gekennzeichnet, dass** die Walze (20), um ihre Längsachse (22) frei drehbar oder nicht, an einem vorderen Querträger (8) befestigt ist, der fest mit dem Chassis (3) verbunden ist und der die Öffnungswerkzeuge (5) trägt.

4. Sämaschine nach Anspruch 1, **dadurch gekennzeichnet, dass** jeder Abschnitt (27) der Walze (20) unabhängig an dem vorderen Querträger (8) montiert ist, mit dem er mittels eines ersten Schwenkgelenks (24) mit einer Schwenkachse, die senkrecht zur Fahrtrichtung (A) und in Arbeitsposition der Sämaschine (1) horizontal ist, verbunden ist.

5. Sämaschine nach Anspruch 4, **dadurch gekennzeichnet, dass** die Position jedes Abschnitts (27) der Walze (20), insbesondere seine Höhenposition in Bezug auf den vorderen Träger (8), mittels mindestens eines Steuerelements (23), vorteilhafterweise durch Schwenken um das erste Schwenkgelenk (24), einstellbar ist.

6. Sämaschine nach einem der Ansprüche 1 bis 5, **dadurch gekennzeichnet, dass** jeder Abschnitt (27) der Walze (20) mit dem vorderen Querträger (8) mittels Tragarmen (30) verbunden ist, eventuell mit verformbarer Struktur und/oder Dämpfungsmittel integrierend, die jeweils mittels eines ersten Schwenkgelenks (24) an dem letzteren montiert sind und deren Position und/oder Ausrichtung mittels eines entsprechenden Steuerelements (23) einstellbar ist, wobei die Form der Tragarme (30) vorteilhafterweise derart ist, dass die Walze (20) unter Einwirkung einer Zugkraft bei der Fahrt der Sämaschine (1) in Arbeitsposition verschoben wird.

7. Sämaschine nach einem der Ansprüche 1 bis 6, **dadurch gekennzeichnet, dass** unter Berücksichtigung der Fahrtrichtung (A) bei der Arbeit vor der Walze (20), vorzugsweise an dem Chassis (3) oder an der Walze (20), ein Ablenker (28) montiert ist.

8. Sämaschine nach Anspruch 7, **dadurch gekennzeichnet, dass** der Ablenker (28) sich kontinuierlich oder in aneinandergereihten benachbarten Abschnitten (28') in der Bauhöhe der Walze (20) und mindestens über die gesamte Breite der Sämaschine (1) erstreckt.

9. Sämaschine nach einem der Ansprüche 7 und 8, **dadurch gekennzeichnet, dass** der Ablenker (28) oder jeder Abschnitt (28'), der Bestandteil des letzteren ist, vorzugsweise als Traverse, die Tragarme (30) der Walze (20) oder der Abschnitte (27) verbindet, fest an der Walze (20) oder einem jeweiligen Abschnitt (27) montiert ist, der der letzteren entspricht.

10. Sämaschine nach einem der Ansprüche 7 und 8, **dadurch gekennzeichnet, dass** der Ablenker (28) oder jeder Abschnitt (28'), der Bestandteil des letzteren ist, in Bezug auf die Walze (20) oder einen jeweiligen Abschnitt (27), der der letzteren entspricht, oder in Bezug auf das Chassis (3) und/oder den vorderen Träger (8), vorzugsweise mittels einer Verbindungsstruktur (29), hinsichtlich Abstand, Höhe und/oder Ausrichtung in der Position einstellbar montiert ist.

11. Sämaschine nach einem der Ansprüche 7 bis 10, **dadurch gekennzeichnet, dass** der Ablenker (28) oder jeder Abschnitt (28'), der Bestandteil des letzteren ist, in Form eines Rohrs oder Ähnlichem ausgeführt ist.

12. Sämaschine nach einem der Ansprüche 1 bis 11, **dadurch gekennzeichnet, dass** die Öffnungswerkzeuge (5) und die Einbringungswerkzeuge (6) Drehwerkzeuge sind und, eins nach dem anderen in Fahrtrichtung (A) zueinander ausgerichtet, in Paaren oder in zwei Reihen jeweils an vorderen (8) und hinteren (9) Querträgern montiert sind, wobei die Öffnungswerkzeuge (5) mittels einer Konsole (35), die mit zwei unabhängigen Tragarmen (36) versehen ist, einem für jedes Werkzeug eines Öffnungswerkzeugpaars (5), mit dem vorderen Träger (8) verbunden sind, und der vordere Träger (8) vorteilhafterweise unter der Wirkung eines Aktuators (11) zum Bewegen der Öffnungswerkzeuge (5) zwischen einer Arbeitsposition am Boden und einer erhöhten Position in Bezug auf das Chassis (3) schwenkbar ist.

13. Sämaschine nach einem der Ansprüche 1 bis 12, **dadurch gekennzeichnet, dass** die Öffnungsdrehwerkzeuge (5), die Einbringungsdrehwerkzeuge (6) und die Walze (20) Durchmesser mit ungefähr gleicher oder sogar im Wesentlichen identischer Größe aufweisen.

## Claims

1. Seeder (1) designed to sow in the presence of vegetation cover or stubble and comprising a chassis (3) which carries furrowing implements (5) and sowing implements (6), this seeder (1) comprising a roller (20) fixed to the chassis (3), being mounted so as to be pivotable about a longitudinal axis (22) perpendicular to the direction of advance (A) at work, said roller (20) being equipped with cutters (21) distributed over its circumference,
seeder (1) **characterised**
**in that** said roller (20) extends under the chassis (3), over the whole of the working width of the seeder (1), within the overall dimensions of the latter and directly in front of the furrowing implements (5),
**in that** said roller (20) comprises a plurality of independent constituent sections (27), aligned in the direction of the longitudinal axis (22) and substantially adjacent, in that each section (27) of the roller (20) is divided into two portions (27'),
**in that** each portion (27') of each section (27) of the roller (20) consists of a plurality of cutters in the form of elongate blades (21) extending between two rotary flanges (33) in the direction of the longitudinal axis (22), being distributed regularly over the periphery of said flanges (33) of substantially discoid shape and provided with receiving and fixing sites (34) distributed over their outer periphery, each portion (27') thus having an apertured cage structure and the flanges (33) being connected to the chassis (3) by supporting arms (30) which are pivotable and adjustable in position, this being by means of the hub (31) of the section (27) in question, and
**in that** the cutters (21) of the two portions (27') of a section (27) are angularly offset from each other, preferably by half a step.

2. Seeder according to claim 1, **characterised in that** the cutters (21) consist of straight or helical elongate blades, extending in the direction of the longitudinal axis (22) of rotation of the roller (20) substantially continuously, in one piece or in segments, over the whole length of said roller (20).

3. Seeder according to any one of claims 1 and 2, **characterised in that** the roller (20) is fixed, being freely rotatable or not about its longitudinal axis (22), to a front transverse beam (8) which is integral with the chassis (3) and carries the furrowing implements (5).

4. Seeder according to claim 1, **characterised in that** each section (27) of the roller (20) is mounted independently on the front transverse beam (8), to which it is connected by a first pivot joint (24) with a pivot axis perpendicular to the direction of advance (A) and horizontal in the working position of the seeder (1).

5. Seeder according to claim 4, **characterised in that** the position of each section (27) of the roller (20), particularly its position in height relative to the front beam (8), is adjustable by means of at least one control member (23), advantageously by pivoting about the first pivot joint (24).

6. Seeder according to any one of claims 1 to 5, **characterised in that** each section (27) of the roller (20) is connected to the front transverse beam (8) by supporting arms (30), which may have a deformable structure and/or incorporate damping means, each mounted on the beam by a first pivot joint (24) and of which the position and/or orientation is adjustable by a corresponding control member (23), the shape of the supporting arms (30) being advantageously such that the roller (20) is displaced under the effect of traction during advance of the seeder (1) in the working position.

7. Seeder according to any one of claims 1 to 6, **characterised in that** a deflector (28) is mounted, taking into account the direction of advance (A) at work, in front of the roller (20), preferably on the chassis (3) or on the roller (20).

8. Seeder according to claim 7, **characterised in that** the deflector (28) extends within the overall dimension in height of the roller (20) and at least over the whole width of the seeder (1), continuously or in aligned contiguous sections (28').

9. Seeder according to any one of claims 7 and 8, **characterised in that** the deflector (28) or each section (28') of which the latter consists is mounted in fixed relationship on the roller (20) or a corresponding respective section (27) of the latter, preferably as a crossbar which connects supporting arms (30) of said roller (20) or of said sections (27).

10. Seeder according to any one of claims 7 and 8, **characterised in that** the deflector (28) or each section (28') of which the latter consists is mounted so as to be adjustable in position, in relation to the roller (20) or to a corresponding respective section (27) of the latter, or in relation to the chassis (3) and/or the front beam (8), in terms of distance, height and/or orientation, preferably by means of a link structure (29).

11. Seeder according to any one of claims 7 to 10, **characterised in that** the deflector (28) or each section (28') of which the latter consists is in the form of a tube or the like.

12. Seeder according to any one of claims 1 to 11, **characterised in that** the furrowing implements (5) and the sowing implements (6) are rotary implements and are mounted, in pairs and in two rows, on front (8) and rear (9) transverse beams respectively, being mutually aligned one by one in the direction of advance (A), the rotary furrowing implements (5) being connected to said front beam (8) by a bracket (35) provided with two independent supporting arms (36), one for each implement of a pair of furrowing implements (5), and said front beam (8) being advantageously pivotable relative to the chassis (3) under the action of an actuator (11) for displacing said furrowing implements (5) between a working position on the ground and a raised position.

13. Seeder according to any one of claims 1 to 12, **characterised in that** the rotary furrowing implements (5), the rotary sowing implements (6) and the roller (20) have diameters of approximately the same size, or even substantially identical.
